# EUROPÄISCHE PATENTSCHRIFT

(11) **EP 1 146 255 B1**
(45) Veröffentlichungstag und Bekanntmachung des Hinweises auf die Patenterteilung: **10.08.2005**
(21) Anmeldenummer: 01104095.3
(22) Anmeldetag: 21.02.2001
(51) Int. Cl.: F16H 55/36, F16F 15/126, F16F 15/16

(54) **Riemenscheibe enthaltend eine drehelastische Kupplung**
Belt pulley comprising a torsional elastic coupling
Poulie comprenant un accouplement torsio-élastique

(30) Priorität: 15.04.2000 DE 10018744
(43) Veröffentlichungstag der Anmeldung: 17.10.2001
(73) Patentinhaber: Carl Freudenberg KG, 69469 Weinheim (DE)
(72) Erfinder: Barsch, Peter, Dr., 79424 Auggen (DE); Kuhn, Walter, 79206 Niederrimsingen (DE); Wohlschlegel, Peter, 79400 Kandern (DE)

(56) Entgegenhaltungen:
- WO-A-01/71219
- DE-A- 19 708 082
- GB-A- 1 312 941
- US-A- 5 139 120
- US-A- 5 140 868
- PATENT ABSTRACTS OF JAPAN vol. 1996, no. 05, 31. Mai 1996 (1996-05-31) & JP 08 014332 A (N O K MEGURASUTEITSUKU KK), 16. Januar 1996 (1996-01-16)
- PATENT ABSTRACTS OF JAPAN vol. 1997, no. 01, 31. Januar 1997 (1997-01-31) & JP 08 240246 A (TOYOTA MOTOR CORP), 17. September 1996 (1996-09-17)

## Beschreibung

### Technisches Gebiet

Die Erfindung bezieht sich auf eine Riemenscheibe mit einer drehelastischen Kupplung, zur Dämpfung von Schwingungen, bei der die Riemenscheibe über ein elastisches Verbindungsglied und eine parallele Viskosekupplung mit einer Nabe relativ zueinander verdrehbar verbunden und über ein Gleitlager auf der Nabe gelagert ist.

Insbesondere in der Automobilindustrie werden mehr und mehr Schwingungsdämpfer eingesetzt, die eine Dämpfung von Schwingungen herbeiführen. Vor allen Dingen wird eine Dämpfung der in höchstem Grade unerwünschten Resonanzschwingungen angestrebt. Ein Gebiet auf dem seit langem Schwingungsdämpfer eingesetzt werden, ist die Dämpfung von Torsionsschwingungen an Kurbelwellen. Hier ist eine Vielzahl von Torsionsschwingungsdämpfern bekannt geworden. So sind hier abgestimmte Gummidämpfer und nicht abgestimmte Flüssigkeitsdämpfer gebräuchlich. Unabhängig von der Bauart arbeiten solche Torsionsschwingungsdämpfer nicht im unteren Drehzahlbereich. Sie verhalten sich dann wie ein starrer Körper. Aus diesem Grunde sind die Torsionsschwingungsdämpfer, wie sie bei Kurbelwellen angewendet werden, nicht für die Entkoppelung von Riemenscheiben einsetzbar. Hier sind deshalb eigene Kupplungen zur Entkopplung erforderlich.

### Stand der Technik

In der DE PS 195 28 239 ist eine Vorrichtung behandelt, bei der in erster Linie eine Dämpfung von Schwingungen an Kurbelwellen erreicht werden soll. Für diese Zwecke wird ein Schwungring über eine Gummilage mit der Befestigungsnabe für den Anschluss an den Schwungring versehen. Am Außenumfang des Schwungrings ist die Lauffläche für einen Riemen vorgesehen, die elastisch ausgebildet ist. Hierdurch soll bereits ab Leerlaufdrehzahl eine Schwingungsisolation möglich sein. Von Nachteil bei dieser Ausführungsform ist jedoch, dass die Konstruktion keine tatsächliche Entkopplung des Riementriebs zulässt, weil die erforderliche torsional weiche Feder bei gleichzeitig ausreichender radialer Steifigkeit der Lauffläche nicht darstellbar ist.

Bekannt ist auch durch die DE OS 43 22 710, die Riemenscheibe entkoppelt anzuordnen, um dadurch eine möglichst wirksame Reduzierung der niederfrequenten Schwingungen zu erreichen. Bei dieser Ausführungsform ist die Riemenscheibe über ein Wälzlager an der Verbindungsnabe gelagert und wird über Gummisegmente an der Nabe gehalten. Die Drehmomentübertragung von der Nabe auf die Riemenscheibe erfolgt durch die Gummisegmente, die gleichzeitig zur Dämpfung der Drehschwingungen dienen. Die Realisierung der gewünschten Federraten ist mit üblichen Werkstoffen kaum möglich. Die Verwendung von zusätzlichen elastischen Einsätzen führt zu neuen Problemen bezüglich der Lebensdauer. Da die Gummisegmente jedoch für die zu übertragenden Drehmomente in der Regel nicht ausreichen, um die vom Riemen angetriebenen Aggregate anzutreiben, sind dort zwischen den Gummisegmenten zusätzliche Anschläge vorgesehen, die nach einer gewissen Auslenkung zwischen der Nabe und Riemenscheibe die Drehmomentübertragung übernehmen. Bei dieser Konstruktion kann nicht ausgeschlossen werden, dass durch die genannten Anschläge eine Geräuschbelästigung entsteht.

Bekannt sind deshalb auch entkoppelte Riemenscheiben DE PS 43 28 596, bei denen die Riemenscheibe über eine Viskosekupplung angekoppelt ist. Der Torsionsschwingungsdämpfer bestehend aus einem Schwungrad, welches über Gummielemente mit der Verbindungsnabe zur Kurbelwelle verbunden ist, ist bei dieser Ausführungsform entweder in Reihe vor der Viskosekupplung oder parallel zur Viskosekupplung angeordnet. Mit dieser Anordnung können sowohl hochfrequente Torsionsschwingungen der Kurbelwelle gedämpft, als auch niederfrequente Schwingungen im niedrigen Drehzahlbereich von den Riemen ferngehalten werden. Der Nachteil dieser Lösung besteht darin, dass grundsätzlich Schlupf vorhanden sein muss, um die Scherkräfte zur Realisierung des notwendigen Antriebsmoments für den Riementrieb zu erzeugen. Es entsteht auch hier eine starke Wärmeentwicklung, die sehr problematisch ist.

Durch die JP-A-08 014332, die alle Merkmale des Oberbegriffs des unabhängigen Anspruchs 1 enthält, ist schließlich eine Riemenscheibe bekannt geworden, die über ein elastisches Verbindungsglied und eine parallele Viskosekupplung mit einer Nabe relativ zueinander verdrehbar verbunden ist. Die Viskosekupplung ist direkt an einem gesonderten Schwungring angebracht und wird auf ihrer einen Seite durch eine Stirnwand (dashboard) begrenzt, die zwischen der Riemenscheibe und der Nabe angeordnet ist.

### Darstellung der Erfindung

Der Erfindung liegt die Aufgabe zugrunde, eine drehelastische Kupplung zur Entkopplung von Riemenscheiben zu bilden, die einfach in ihrem Aufbau ist und die eine gute Dämpfung der an den Riemenscheiben möglichen Schwingungen erzielt. Die Resonanz unterhalb der Leerlaufdrehzahl soll bedämpft werden, um bei Start / Stop die kurzzeitig auftretenden großen Ausschläge der Riemenscheibe zu reduzieren.

Die Lösung der gestellten Aufgabe wird bei einer Riemenscheibe mit einer drehelastischen Kupplung erfindungsgemäß dadurch erreicht, dass die Riemenscheibe einen gesonderten flüssigkeitsdichten Bereich aufweist, in dem die Viskosekupplung einen Aufnahmeraum für die Viskoseflüssigkeit hat, der von zwei mit der Riemenscheibe verbundenen seitlichen Ringscheiben und einer in den Aufnahmeraum hineinragenden, mit der Nabe verbundenen mittleren Ringscheibe begrenzt ist. Durch die Parallelschaltung einer elastischen Kupplungsfeder und eines geschwindigkeitsabhängigen Dämpfungsmechanismus ist es möglich, die erste Systemeigenfrequenz mit sicherem Abstand unter die Leerlaufdrehzahl zu legen, ohne dass extreme Ausschläge der Kupplung bei Start / Stop auftreten. Die Drehzahlschwankungen oder Drehschwingungen der Kurbelwelle werden vom Riementrieb zum Antrieb der Nebenaggregate ferngehalten. Durch die elastischen Verbindungsglieder werden relativ weiche Torsionssteifigkeiten erzielt, um damit die erste Torsionseigenfrequenz des Riementriebs in ausreichendem Abstand unter der Leerlaufdrehzahl zu halten, um jederzeit die Entkopplung zu gewährleisten. Die beim Motorstart und Motorstop zu durchfahrende Resonanzstelle, bei der sehr große Amplituden auftreten, wird durch die Viskosekupplung gedämpft. Dadurch wird eine höhere Lebensdauer der Kupplung erreicht und nicht akzeptable Geräusche am Riementrieb vermieden. Durch die Anbringung der Riemenscheibe über ein Gleitlager auf der Nabe wird eine sichere Lagerung der Riemenscheibe erreicht. Insgesamt wird ein sehr einfacher Aufbau der Viskosekupplung erreicht.

Teile der Viskosekupplung werden als Gleitlager verwendet. Hier dienen die radial inneren Ringflächen der seitlichen Ringscheiben und die neben der mittleren Ringscheibe vorhandenen Ringflächen der Nabe als Gleitlager.

Aus Gründen der leichten Zugänglichkeit kann die axial äußere seitliche Ringscheibe lösbar mit der Riemenscheibe verbunden sein. Hierdurch wird auch der Zusammenbau der einzelnen Teile erleichtert.

Der oben geschilderte Aufbau einer entkoppelten Riemenscheibe gestattet über das elastische Verbindungsglied zur Nabe eine Schwingungsdämpfung im unteren Drehzahlbereich. Die parallel dazu vorhandene Viskosekupplung begrenzt kurzzeitig auftretende Ausschläge der Riemenscheibe. Somit wird in einem weiten Drehzahlbereich eine Dämpfung erzielt. Durch die Anordnung der Viskosekupplung in direkter Verbindung zur Lagerung der Riemenscheibe auf der Nabe wird außerdem der Vorteil erreicht, dass das Gleitlager ständig geschmiert wird.

Für die Dämpfung von Schwingungen, die von der Kurbelwelle ausgehen und in höheren Drehzahlbereichen auftreten, ist ein Torsionsschwingungsdämpfer integriert verbunden. Die Verbindung kann in an sich bekannter Weise durch Gummi oder vergleichbare elastomere Werkstoffe erreicht werden. Eine besonders günstige Ausführungsform ergibt sich dann, wenn das Schwungrad innerhalb der Riemenscheibe die Gegenlauffläche des Gleitlagers bildet.

### Ausführung der Erfindung

Anhand eines Ausführungsbeispiels wird die Erfindung näher erläutert.

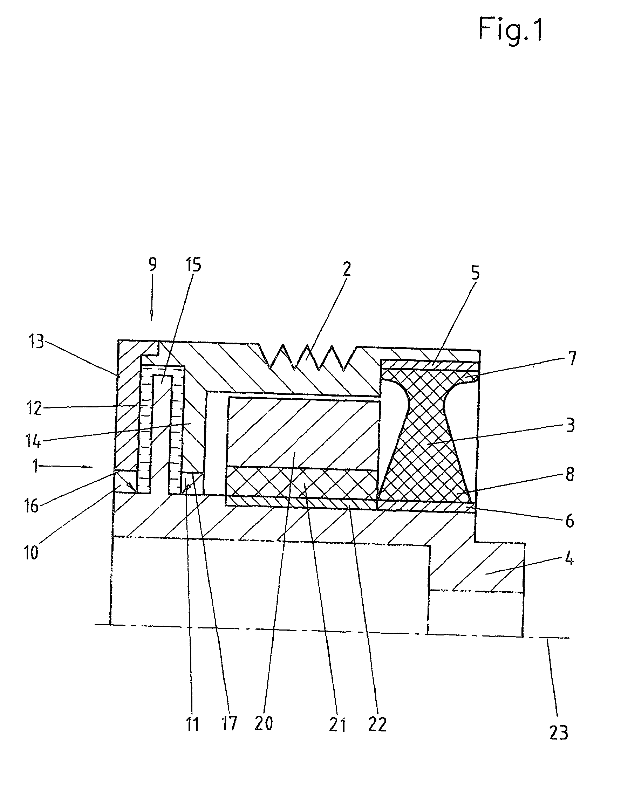

In der Figur sind in schematischer Darstellung die einzelnen Elemente der Kupplung aufgeführt. Die drehelastische Kupplung 1 hat die Riemenscheibe 2, die über das elastische Verbindungsglied 3 mit der Nabe 4 verbunden ist. Das Verbindungsglied 3 besteht aus Gummi, das von einem äußeren Metallring 5 und einem inneren Metallring 6 eingefasst ist. Auf dem Kreisumfang des Verbindungsglieds 3 sind mehrere speichenartig ausgebildete Gummiglieder eingesetzt. Sie sind untereinander durch umlaufende Ränder 7 und 8 integral verbunden. An die Metallringe 5 und 6 sind die Ränder 7 und 8 anvulkanisiert. Auf diese Weise sind die Riemenscheibe 2 und die Nabe 4 relativ zueinander verdrehbar verbunden.

Parallel zu dieser drehelastischen Verbindung von Riemenscheibe 2 und Nabe 4 sind letztere auch durch die Viskosekupplung 9 verbunden, die parallel zu der elastischen Kupplung aus dem Verbindungsglied 3 angeordnet ist.

Die Riemenscheibe 2 ist auf der Nabe 4 gelagert. Die Lagerung kann im allgemeinen sehr unterschiedlich ausgebildet sein, je nach konstruktiver Ausbildung der Riemenscheibe 2 und der Nabe 4. Im Ausführungsbeispiel werden zwei Gleitlager 10 und 11 eingesetzt.

Zur Bildung der Viskosekupplung 9 ist die Riemenscheibe 2 mit einem gesonderten flüssigkeitsdichten Bereich ausgestattet, in dem die Viskosekupplung angeordnet ist. Die Viskosekupplung 9 besteht aus einem Aufnahmeraum 12 für die Viskoseflüssigkeit, der von Teilen der Riemenscheibe 2 und der Nabe 4 begrenzt wird. Die Riemenscheibe 2 hat hierfür zwei seitliche Ringscheiben 13 und 14, welche eine mittlere Ringscheibe 15, die von der Nabe 4 ausgeht, mit vorgegebenen Abstand einfassen. Durch die gewählte Viskoseflüssigkeit und eingestellten Abstand zwischen den Ringscheiben wird der Dämpfungsbereich der Viskosekupplung eingestellt.

Die radial inneren Ringflächen 16 und 17 der seitlichen Ringscheibe 13 und 14 liegen direkt an den Ringflächen der Nabe 4 an und bilden die Gleitlagerung für die Riemenscheibe 2.

Für Montagezwecke ist die axial äußere seitliche Ringscheibe 13 lösbar mit der Riemenscheibe 2 verbunden. Die Ringe 5 und 6 sind mit Press-Sitz zwischen Riemenscheibe 2 und Nabe 4 eingefügt.

Innerhalb der Riemenscheibe 2 ist der Schwungring 20 eingefügt, der die von der Kurbelwelle ausgehenden Schwingungen dämpft. Das Schwungrad 20 ist hierfür über eine mit entsprechender Steifigkeit ausgestattete Gummischicht 21 mit Metallring 22 auf die Nabe 4 aufgesetzt.

In der Figur ist lediglich die obere Hälfte eines Längsschnitts durch eine Kupplung nach der Erfindung gezeigt. Die Kupplung dreht um die Achse 23 und ihre untere Hälfte ist identisch mit der oberen Hälfte. In der Figur ist lediglich der prinzipielle Aufbau einer Kupplung nach der Erfindung dargestellt. Andere konstruktive Ausgestaltungen und Anordnungen der einzelnen Kupplungsteile sind selbstverständlich möglich.

## Patentansprüche

1. Riemenscheibe (2) enthaltend eine drehelastische Kupplung (1) zur Dämpfung von Schwingungen, bei der die Riemenscheibe (2) über ein elastisches Verbindungsglied (3) und eine parallele Viskosekupplung (9) mit einer Nabe (4) relativ zueinander verdrehbar verbunden ist und über Gleitlager (10, 11) auf der Nabe (4) gelagert ist und einen gesonderten flüssigkeitsdichten Bereich aufweist, in dem die Viskosekupplung (9) angeordnet ist, wobei die Viskosekupplung (9) einen Aufnahmeraum (12) für die Viskoseflüssigkeit hat, der von mit der Riemenscheibe (2) verbundenen seitlichen Ringscheiben (13, 14) und einer in den Aufnahmeraum (12) hineinragenden, mit der Nabe (4) verbundenen mittleren Ringscheibe (15) begrenzt ist, **dadurch gekennzeichnet, dass** die radial inneren Ringflächen (16, 17) der seitlichen Ringscheiben (13, 14) der Riemenscheibe (2) und die neben der mittleren Ringscheibe (15) vorhandenen Ringflächen der Nabe (4) als Gleitlager dienen.

2. Riemenscheibe nach Anspruch 1, **dadurch gekennzeichnet, dass** die axial äußere seitliche Ringscheibe (13) lösbar mit der Riemenscheibe (2) verbunden ist.

3. Riemenscheibe nach einem der Ansprüche 1 oder 2, **dadurch gekennzeichnet, dass** die drehelastische Kupplung (1) mit einem gesonderten Schwungring (20) ausgestattet ist, der drehelastisch mit der Nabe (4) verbunden ist.

4. Riemenscheibe nach Anspruch 3, dass der Schwungring (20) innerhalb der Riemenscheibe (2) angeordnet ist.

## Claims

1. Belt pulley (2) comprising a torsional elastic coupling (1) for damping vibrations, in which the belt pulley (2) is connected to a hub (4) via an elastic connecting member (3) and a parallel viscous coupling (9), in such a way that said belt pulley (2) and said viscous coupling (9) are rotatable relative to one another, and is mounted on the hub (4) via sliding bearings (10, 11) and has a separate liquid-tight region in which the viscous coupling (9) is arranged, the viscous coupling (9) having a receiving space (12) for the viscous liquid, this receiving space (12) being defined by lateral annular discs (13, 14) connected to the belt pulley (2) and by a centre annular disc (15) projecting into the receiving space (12) and connected to the hub (4), **characterized in that** the radially inner annular surfaces (16, 17) of the lateral annular discs (13, 14) of the belt pulley (2) and the annular surfaces of the hub (4) which are next to the centre annular disc (15) serve as sliding bearings

2. Belt pulley according to Claim 1, **characterized in that** the axially outer annular disc (13) is releasably connected to the belt pulley (2).

3. Belt pulley according to either of Claims 1 and 2, **characterized in that** the torsional elastic coupling (1) is provided with a separate centrifugal ring (20) which is connected to the hub (4) in a torsionally elastic manner.

4. Belt pulley according to Claim 3, **characterized in that** the centrifugal ring (20) is arranged inside the belt pulley (2).

## Revendications

1. Poulie (2) comprenant un accouplement élastique à rotation (1) pour l'amortissement d'oscillations, dans lequel la poulie (2) est connectée par le biais d'un organe de connexion élastique (3) et d'un accouplement visqueux parallèle (9) à un moyeu (4) de manière à ce qu'ils puissent tourner l'un par rapport à l'autre, et est montée sur le moyeu (4) par le biais de paliers lisses (10, 11) et présente une zone séparée étanche aux fluides, dans laquelle l'accouplement visqueux (9) est disposé, l'accouplement visqueux (9) ayant un espace de réception (12) pour le fluide visqueux, qui est limité par des rondelles latérales (13, 14) connectées à la poulie (2) et une rondelle centrale (15) connectée au moyeu (4) pénétrant dans l'espace de réception (12), **caractérisée en ce que** les surfaces annulaires radialement internes (16, 17) des rondelles latérales (13, 14) de la poulie (2) et les surfaces annulaires du moyeu (4) prévues à côté de la rondelle centrale (15) servent de palier lisse.

2. Poulie selon la revendication 1, **caractérisée en ce que** la rondelle latérale axialement externe (13) est connectée de manière desserrable à la poulie (2).

3. Poulie selon l'une quelconque des revendications 1 ou 2, **caractérisée en ce que** l'accouplement élastique à rotation (1) est pourvu d'une bague volante séparée (20) qui est connectée au moyeu (4) de manière élastique à rotation.

4. Poulie selon la revendication 3, **caractérisée en ce que** la bague volante (20) est disposée à l'intérieur de la poulie (2).
